# EUROPÄISCHE PATENTSCHRIFT

(11) **EP 2 328 806 B1**
(45) Veröffentlichungstag und Bekanntmachung des Hinweises auf die Patenterteilung: **19.09.2012**
(21) Anmeldenummer: 09741872.7
(22) Anmeldetag: 05.05.2009
(51) Int. Cl.: B64C 13/42

(54) **FEHLERTOLERANTES STELLSYSTEM ZUR VERSTELLUNG VON KLAPPEN EINES FLUGZEUGS MIT EINER VERSTELLKINEMATIK MIT FESTSTEHENDER DREHACHSE SOWIE VERFAHREN ZUR ÜBERWACHUNG EINES STELLSYSTEMS**
FAIL-SAFE ADJUSTMENT SYSTEM FOR ADJUSTING SERVO TABS OF AN AIRCRAFT, COMPRISING A CONTROL MECHANISM WITH A FIXED ROTATIONAL AXIS AND ASSOCIATED CONTROL METHOD
SYSTÈME DE RÉGLAGE TOLÉRANT AUX PANNES POUR LE RÉGLAGE DE VOLETS D'UN AVION, COMPRENANT UN MÉCANISME DE RÉGLAGE À AXE DE ROTATION FIXE AINSI QUE PROCEDE DE CONTRÔLE

(30) Priorität: 05.05.2008 US 50306; 05.05.2008 DE 102008022092
(43) Veröffentlichungstag der Anmeldung: 08.06.2011
(73) Patentinhaber: Airbus Operations GmbH, 21129 Hamburg (DE)
(72) Erfinder: RICHTER, Martin, 28717 Bremen (DE); FLEDDERMANN, Andreas, 28357 Bremen (DE)
(74) Vertreter: Schatt, Markus F.
(86) Internationale Anmeldenummer: PCT/EP2009/003219
(87) Internationale Veröffentlichungsnummer: WO 2009/135653

(56) Entgegenhaltungen:
- EP-A- 1 486 416
- EP-A- 1 547 917
- EP-A- 1 640 265
- EP-A- 1 739 009

## Beschreibung

Die Erfindung betrifft ein fehlertolerantes Stellsystem zur Verstellung von Klappen eines Flugzeugs mit einer Verstell-Kinematik mit feststehender Drehachse sowie Verfahren zur Überwachung eines Stellsystems.

Mit dem fehlertoleranten Stellsystem zur Verstellung von Klappen eines Flugzeugs kann eine Anzahl von vorbestimmten Ausfällen von Bestandteilen des Stellsystems kompensiert werden.

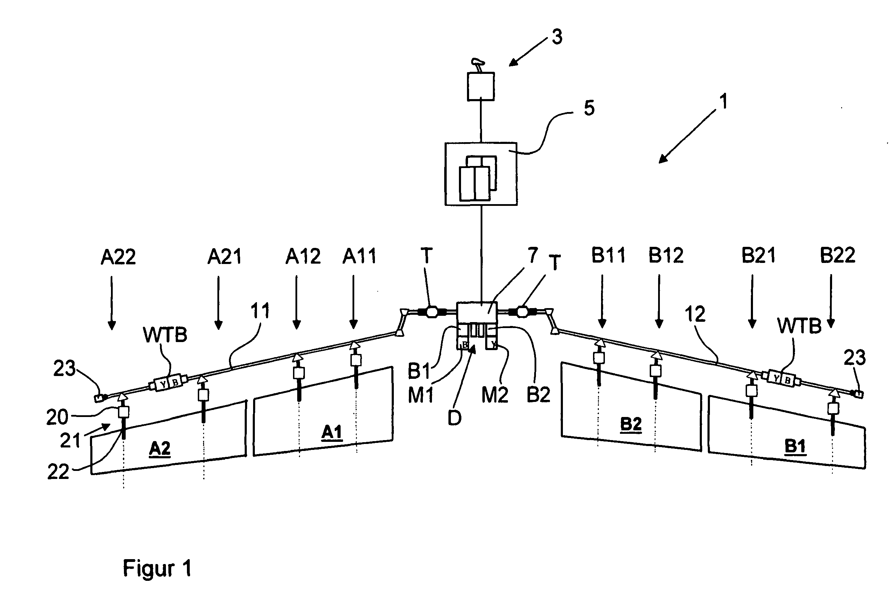

Das Dokument EP 1 739 009 A1 beschreibt ein elektrisches Überwachungssystem für ein Stellantriebssystem für Klappen an der Hinterkante oder Vorderkante eines Flugzeugflügels. Das Dokument EP 1 640 265 A1 offenbart ein Überwachungssystem für eine Höhenflosse eines Flugzeugs.Aus dem Stand der Technik ist das in der Figur 1 gezeigte Verstellsystem bekannt, das in der Figur dargestellte Hochauftriebsystem 1 ist zum Verstellen zumindest einer Landeklappe an jedem Tragflügel vorgesehen. In der Figur 1 sind zwei Landeklappen je Tragflügel, der in der Darstellung der Figur 1 nicht gezeigt ist, dargestellt. Im Einzelnen sind dargestellt: eine innere Landeklappe A1 und eine äußere Landeklappe A2 an einem ersten Tragflügel und eine innere Landeklappe B1 und eine äußere Landeklappe B2 an einem zweiten Tragflügel. Bei dem erfindungsgemäßen Hochauftriebssystem können auch mehr als zwei Landeklappen pro Tragflügel verwendet werden. Das Hochauftriebsystem 1 wird betätigt und kontrolliert über eine Piloten-Schnittstelle, die insbesondere ein Betätigungsorgan 3 wie z.B. einen Betätigungshebel aufweist. Das Betätigungsorgan 3 ist mit einer Steuerungs- und Überwachungsvorrichtung 5 funktional gekoppelt, die Steuerkommandos über eine Ansteuerungs-Leitung 8 zur Ansteuerung einer zentralen Antriebseinheit 7 übermittelt.

Die zentral, d.h. im Rumpfbereich angeordnete Antriebseinheit 7 weist zwei Antriebsmotoren, z. B. einen Hydraulikmotor H und einen Elektrikantrieb E, sowie diesen zugeordnete Brems-Vorrichtungen B1, B2 auf. Weiterhin weist die zentrale Antriebseinheit 7 ein Differential auf. Das Differential ist mit den Ausgangsseiten des Hydraulikmotors M1 und des Elektromotors M2 derart gekoppelt, dass die von dem Hydraulikmotor H und dem Elektromotor jeweils bereitgestellten Leistungen summiert werden und an Antriebs-Drehwellen 11, 12 übertragen werden. Die Brems-Vorrichtungen B1, B2 können durch ein Kommandosignal der Steuerungs- und Überwachungsvorrichtung 5 betätigt werden.

An die zentrale Antriebseinheit 7 sind insgesamt zwei Antriebs-Drehwellen 11, 12 jeweils zur Betätigung der zumindest einen Klappe A1, A2 bzw. B1, B2 je Tragflügel angekoppelt. Die beiden Antriebs-Drehwellen 11, 12 sind an die zentrale Antriebseinheit 7 gekoppelt und werden durch diese miteinander synchronisiert. Aufgrund entsprechender Steuerkommandos versetzt die zentrale Antriebseinheit 7 die Antriebs-Drehwellen 11, 12 in Drehung zur Ausübung von Stellbewegungen der mit diesen gekoppelten Verstell-Vorrichtungen der jeweiligen Klappe. In einem der Antriebseinheit 7 nahe gelegenen Wellenabschnitt der Antriebs-Drehwellen 11, 12 kann ein Drehmoment-Begrenzer T integriert sein.

An jeder Klappe A1, A2 bzw. B1, B2 sind zwei Verstell-Vorrichtungen vorgesehen. Bei dem in der Figur 1 dargestellten Hochauftriebssystem sind an jeder Klappe jeweils zwei Verstellvorrichtungen angeordnet, und zwar im Einzelnen an den inneren Klappen A1 und B1 die Verstell-Vorrichtungen A11, A12 bzw. B11, B12 und an den äußeren Klappen A2 und B2 die Verstell-Vorrichtungen A21, A22 bzw. B21, B22.

Im Folgenden werden die Verstell-Vonichtungen A11, A12, B11, B12, A21, A22, B21, B22 beschrieben, wobei die Bestandteile verschiedener Verstell-Vorrichtungen gleicher Funktion in jeder Verstell-Vorrichtung mit demselben Bezugzeichen versehen ist.

Jeder der Verstell-Vorrichtungen A11, A12, B11, B12, A21, A22, B21, B22 ist ein Übersetzungsgetriebe 20, eine Verstell-Kinematik 21 mit einem festen Klappen-Drehpunkt sowie ein Positionssensor 22 zugeordnet. Das Übersetzungsgetriebe 20 ist mechanisch an die jeweiligen Antriebs-Drehwellen 11, 12 angekoppelt und setzt eine Rotationsbewegung der jeweiligen Antriebs-Drehwellen 11, 12 in eine Verstellbewegung des Klappenbereichs um, der mit der jeweiligen Verstell-Vorrichtungen A11, A12, B11, B12, A21, A22, B21, B22 gekoppelt ist. An jeder Verstell-Vorrichtung A11, A12, B11, B12, A21, A22, B21, B22 einer Klappe ist ein Positionssensor 22 angeordnet, der die aktuelle Position der jeweiligen Klappe ermittelt und diesen Positionswert über eine nicht dargestellte Leitung an die Steuerungs- und Überwachungsvorrichtung 5 sendet.

Zusätzlich ist an den Enden der Drehwellen-Antriebsstränge 11 bzw. 12 ein Asymmetrie-Sensor 23 angeordnet, der ebenfalls über eine nicht dargestellte Leitung funktional mit der Steuerungs- und Überwachungsvorrichtung 5 verbunden ist und über diese Leitung einen aktuellen Wert an die Steuerungs- und Überwachungsvorrichtung 5 sendet, der aussagt, ob die Enden der Drehwellen-Antriebsstränge 11 bzw. 12 innerhalb eines vorgegebenen Bereichs rotiert werden oder ob eine asymmetrische Drehstellung der Antriebs-Drehwellen 11 bzw. 12 gegeben ist.

Weiterhin sind an einer Stelle der Antriebs-Drehwellen 11 bzw. 12, der in einem äußeren Bereich des jeweiligen Flügels gelegen ist, jeweils eine Flügelendbereichs-Bremse WTB angeordnet, die bei Betätigung den jeweiligen Antriebsstrang 11 bzw. 12 blockieren kann. Jede der Flügelendbereichs-Bremsen WTB ist über eine ebenfalls nicht dargestellte Leitung funktional mit der Steuerungs- und Überwachungsvorrichtung 5 verbunden und kann über diese Leitung von der Steuerungs- und Überwachungsvorrichtung 5 angesteuert und betätigt werden. Im Betrieb ist der normale Ausgangszustand der Flügelendbereichs-Bremse WTB ein nicht-betätigter Zustand, bei dem diese auf die Rotation der Antriebs-Drehwellen 11 bzw. 12 nicht eingreifen. Bei einem entsprechenden Steuerungssignal von der Steuerungs- und Überwachungsvorrichtung 5 können die Flügelendbereichs-Bremsen WTB betätigt werden, um den jeweils zugeordneten Antriebs-Drehwelle 11 bzw. 12 zu arretieren.

Beide Brems-Vorrichtungen B1, B2 sind funktional mit der Steuerungs- und Überwachungsvorrichtung 5 verbunden, die bei vorbestimmten Bedingungen die Brems-Vorrichtungen B1, B2 betätigen und damit die Drehwellen-Antriebsstränge 11, 12 arretieren kann. Wird einer der beiden Antriebsmotoren, der Hydraulikmotor H oder der Elektrikantrieb E, abgeschaltet, gibt die zentrale Antriebseinheit 7 aufgrund des Differentials, das derart gestaltet ist, dass die von dem Hydraulikmotor H und dem Elektromotor jeweils bereitgestellten Leistungen summiert werden, eine um den Betrag der abgeschaltete Antriebsmotors reduzierte Leistung ab.

Mechanische Fehler bei den Klappen-Betätigungsmechanismen A11, A12, A21, A22, B11, B12, B21, B22 wie z.B. ein Klemmen eines Bestandteils eines Klappen-Betätigungsmechanismus oder der Drehwellen-Antriebsstränge 11, 12 oder ein Bruch einer Antriebs-Drehwelle eines Drehwellen-Antriebsstranges11, 12 kann zu unerwünschtem Verhalten der Vorrichtung wie z. B. einer asymmetrischen Betätigung der Klappenelemente führen, was die Steuerungs- und Überwachungsvorrichtung 5 mittels der von den Asymmetrie-Sensoren 23 übermittelten Signale feststellt. Daraufhin sendet der Steuerungscomputer 5 ein Abschaltsignal an die Flügelendbereichs-Bremse WTB, um die Flügelendbereichs-Bremsen WTB zu betätigen und die Antriebs-Drehwellen 11, 12 zu arretieren.

Bei einer nicht zulässigen Abweichung der von der Steuerungs- und Überwachungsvorrichtung 5 ermittelten Soll-Positionen von den mittels der Positionssensoren 22 erfassten Ist-Positionen sendet die Steuerungs- und Überwachungsvorrichtung 5 ein Betätigungs-Signal an die Flügelendbereichs-Bremse WTB sowie an die Brems-Vorrichtungen B1, B2 zur Arretierung beider Wellenstränge 11, 12.

Aufgabe der Erfindung ist, ein fehlertolerantes Hochauftriebssystem zur Verstellung der Klappe eines Flugzeugs sowie Verfahren zur Überwachung eines Stellsystems bereitzustellen, das jeweils bei relativ geringem Komponenten-Aufwand eine möglichst gute Funktionssicherheit gewährleistet.

Diese Aufgabe wird mit den Merkmalen der unbahängigen Patentansprüche gelöst. Weitere Ausführungsformen sind in den auf diese rückbezogenen Unteransprüchen angegeben.

Erfindungsgemäß ist insbesondere ein fehlertolerantes Stellsystem mit zumindest einer an jeweils einem der Tragflügel eines Flugzeugs verstellbaren Klappe und mit einer Steuerungs- und Überwachungsvorrichtung vorgesehen, aufweisend:
■ mit der Steuerungs- und Überwachungsvorrichtung funktional in Verbindung stehende Antriebsvorrichtungen, von denen jeweils eine jeder Klappe zugeordnet ist, wobei jeder Klappe jeweils eine Antriebsvorrichtung zugeordnet ist, jeweils aufweisend: zwei Antriebsmotoren, zwei Brems-Vorrichtungen, wobei jedem Antriebsmotor jeweils eine Brems-Vorrichtung zum Anhalten des Ausgangs des jeweiligen Antriebsmotors zugeordnet ist, ein die Ausgänge derselben auf diese summierende Weise koppelndes Differential, eine Ausgangswelle zur Kopplung des Ausgangs des Differentials mit Antriebs-Verbindungen und eine mit der Steuerungs- und Überwachungsvorrichtung funktional in Verbindung stehende Differentialsperre aufweist, wobei jede der Brems-Vorrichtungen sowie die Differentialsperre durch ein Kommandosignal der Steuerungs- und Überwachungsvorrichtung betätigt werden kann;
■ Verstellvorrichtungen, von denen zumindest zwei an jeder Klappe und voneinander in Spannweiten-Richtung der Klappe beabstandet angeordnet sind und die über jeweils eine Antriebs-Verbindung an die der Klappe jeweils zugeordnete Antriebsvorrichtung angekoppelt sind, wobei jede Verstellvorrichtung jeweils aufweist: ein Übersetzungsgetriebe, eine Verstellmechanik sowie einen mit der Steuerungs- und Überwachungsvorrichtung funktional verbundenen Positionssensor zur Erfassung des Verstellzustands der Klappe;
wobei die Steuerungs- und Überwachungsvorrichtung aufweist:
■ eine Stell-Funktion zur Erstellung von Kommandosignalen für die Antriebsmotoren zur Verstellung der Klappe,
■ eine Übervvachungs-Funktion, mit der ein Kommandosignal an beide Brems-Vorrichtungen sowie an die Differentialsperre zur Betätigung derselben geschickt wird, wenn die Steuerungs- und Überwachungsvorrichtung aufgrund des Vergleichs von Sensorwerten der Positions-Sensoren an zwei verschiedenen Verstell-Vortichtungen einer Klappe unterschiedliche Verstell-Zustände ermittelt, die ein vorbestimmtes Maß überschreiten.

Bei der erfindungsgemäßen Lösung wird ein Fehler einer der beiden Brems-Vorrichtungen der Antriebsvorrichtung, z.B. ein Durchrutschen der Brems-Vorrichtung oder die Trennung eines Antriebsmotors vom Differential durch die Positionssensoren an der Klappe sensiert, da es über das Differential zu einem ungewollten Weglaufen der Klappe kommt. Mit bisherigen Differential-Anordnungen ist bei diesem Fehlerfall oder in Kombination mit dem oben beschriebenen Wellenbruch eine Arretierung des verbleibenden Wellenstranges der Antriebs-Verbindung nicht möglich. Diese Problematik wird erfindungsgemäß gelöst durch die Überwachungs-Funktion in Verbindung mit der Differentialsperre, die das Differential bei solchen Fehlerfällen sperrt und somit die verbleibende, intakte Brems-Vorrichtung des jeweils anderen Antriebsmotors in Eingriff bringt. Damit wird das volle Bremsmoment auf den Wellenstrang der Antriebs-Verbindungen gebracht und die Klappe sicher arretiert.

Durch das Vorsehen einer Differentialsperre wird der Fehler einer defekten Brems-Vorrichtung abgedeckt, so dass das Vorsehen einer Flügelendbereichs-Bremse WTB an den Drehwellen der Antriebs-Verbindungen nicht notwendig ist. Ebenso kann bei dieser Anordnung auf sogenannte System-Drehmomentenbegrenzer ("Torque Limiter") verzichtet werden: Im Klemmfall einer Station werden die Designlasten durch die Antriebsvorrichtung nicht überschritten, da die Antriebsvorrichtungen gegenüber herkömmlichen Anordnungen für eine Klappe spezifisch ausgelegt werden kann. Durch die Positionssensoren an den Klappen kann auch auf Positionsrückführungs-Sensoren in der Antriebsvorrichtung zur Ermittlung einer Positionsrückführung an der Antriebsvorrichtung, wie diese nach dem Stand der Technik vorgesehen sind, verzichtet werden. Diese Komponenten können jedoch in bestimmten Anwendungsfällen zur Erhöhung der Funktionalität und/oder der Fehlertoleranz des erfindungsgemäßen Systems dennoch integriert sein.

Unter "Klappe" werden in diesem Zusammenhang Stellklappen an den Tragflächen eines Flugzeuges wie Landeklappen, Querruder, Spoiler oder Seitenruder sowie Vorflügel verstanden.

Weiterhin wird in dem Zusammenhang der Darstellung der Erfindung unter Signal jede Art von zwischen Funktionsmodulen übermittelter Größe verstanden, z.B. ein analoges Signalgröße oder ein digitaler Wert.

Eine "funktionale Verbindung" kann in dem Zusammenhang der Darstellung der Erfindung z.B. eine analoge Signalverbindung oder eine digitale Datenverbindung sein.

Das erfindungsgemäße Stellsystem kann insbesondere ein Hochauftriebssystem sein.

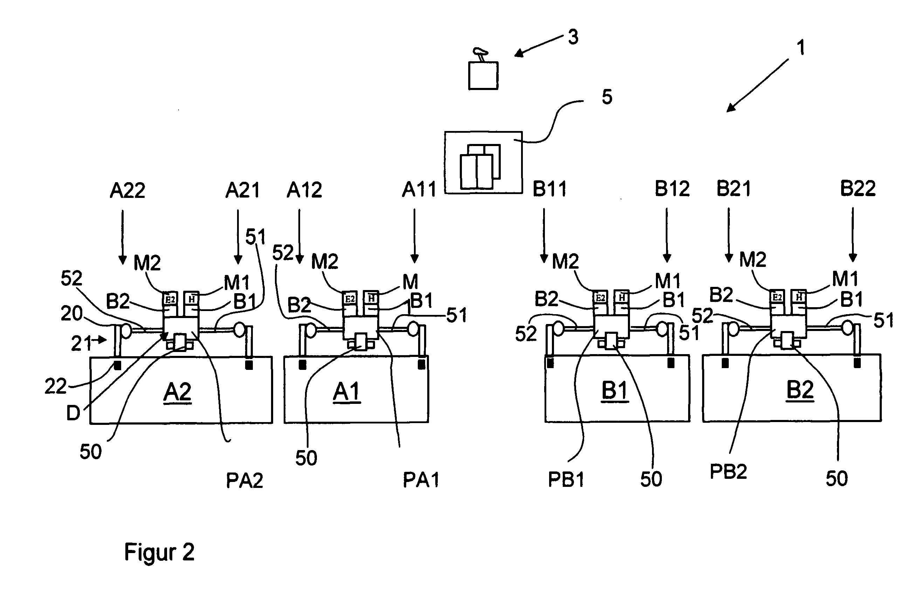

Im Folgenden werden Ausführungsbeispiele der Erfindung an Hand der beigefügten Figuren beschrieben, die zeigen:
■ Figur 1 eine funktionale Darstellung eines bekannten Hochauftriebs-Systems; und
■ Figur 2 eine funktionale Darstellung eines Ausführungsbeispiels des erfindungsgemäßen fehlertoleranten Stellsystems am Beispiel eines Hochauftriebssytems zum Verstellen von Landeklappen, wobei Bestandteilen des Hochauftriebssystems der Figur 2, die ähnliche Funktion aufweisen wie in der Figur 1 teilweise dieselben Bezugszeichen zugeordnet sind;

Die Erfindung wird am Beispiel eines Antriebssystems für Landeklappen A1, A2; B1 B2 beschrieben, kann jedoch generell für an einem Hauptflügel verstellbare Klappen oder aerodynamische Körper verwendet werden. Jede Klappe A1, A2; B1 B2 ist mittels jeweils einer zugeordneten Antriebsvorrichtung PA1, PA2, PB1, PB2 zwischen einer eingefahrenen Stellung und mehreren ausgefahrenen Stellungen verstellbar.

Das in der Figur 2 dargestellte Stellsystem oder Hochauftriebsystem 1 ist zum Verstellen zumindest einer Landeklappe an jedem Tragflügel vorgesehen. In dem in der Figur 2 dargestellten Ausführungsbeispiel sind zwei aerodynamische Körper oder Klappen je Tragflügel, der in der Darstellung der Figur 1 nicht gezeigt ist, dargestellt: eine innere Klappe A1 und eine äußere Klappe A2 an einem ersten Tragflügel und eine innere Klappe B1 und eine äußere Klappe B2 an einem zweiten Tragflügel. Bei dem erfindungsgemäßen Hochauftriebssystem können auch mehr als zwei Klappen pro Tragflügel verwendet werden.

Jedem aerodynamischen Körper oder jeder Klappe ist jeweils eine Antriebseinheit zugeordnet, wobei an den inneren Klappen A1, B1 die Antriebsvorrichtungen PA1 bzw. PB1 und an den äußeren Klappen A2, B2 die Antriebsvorrichtungen PA2 bzw. PB2 angekoppelt sind.

Die Antriebsvorrichtungen PA1, PA2, PB1, PB2 können automatisch oder über eine Piloten-Schnittstelle 3 betätigt und kontrolliert werden, die insbesondere ein Betätigungsorgan wie z.B. einen Betätigungshebel aufweist. Die Piloten-Schnittstelle 3 ist mit einer Steuerungs- und Überwachungsvorrichtung 5 funktional gekoppelt. Die Steuerungs- und Überwachungsvorrichtung 5 steht funktional mit jeder Antriebsvorrichtung PA1, PA2, PB1, PB2 in Verbindung, wobei jedem aerodynamischen Körper A1, A2; B1, B2 jeweils eine Antriebsvorrichtung PA1, PA2, PB1, PB2 zugeordnet ist.

An die Antriebsvorrichtungen PA1, PA2, PB1, PB2 sind zwei Antriebs-Verbindungen 51, 52 mit Antriebswellen angekoppelt, die von den Antriebsvorrichtungen PA1, PA2, PB1, PB2 angetrieben werden. Jeder der Antriebs-Verbindungen 51, 52 ist mit einer Verstellmechanik 21 gekoppelt.

Jede der Antriebsvorrichtungen PA1, PA2, PB1, PB2 weist auf:
■ zwei Antriebsmotoren, z.B. einen Hydraulikmotor H und einen Elektrikantrieb E,
■ zwei Brems-Vorrichtungen B1 und B2 auf, von denen eine erste Brems-Vorrichtung B1 dem einen Antriebsmotor und von denen ein zweites Brems-Vorrichtung B2 dem anderen Antriebsmotor H zugeordnet ist, um die Ausgänge jeweils des ersten bzw. zweiten Antriebsmotors anzuhalten und zu arretieren, wobei jede der Brems-Vorrichtungen B1, B2 durch ein Kommandosignal der Steuerungs- und Überwachungsvorrichtung 5 betätigt werden kann,
■ ein Differential, dessen Ausgang mit den Antriebsmotoren derart gekoppelt ist, dass die von dem Hydraulikmotor H und dem Elektromotor jeweils bereitgestellten Leistungen summiert werden und an die Antriebs-Stränge 51, 52 übertragen werden.
■ eine mit der Steuerungs- und Überwachungsvorrichtung 5 funktional in Verbindung stehende Differentialsperre 50.

Die zwei Antriebsmotoren M1, M2 können insbesondere zwei unabhängige, in der Geschwindigkeit regelbare Antriebsmotoren sein. Weiterhin können die zwei Antriebsmotoren M1, M2 aus zwei Hydraulikantrieben oder zwei Elektrikantrieben oder einer Kombination aus einem Hydraulikantrieb und einem Elektrikantrieb gebildet sein.

Die Brems-Vorrichtungen B1 und B2 sind jeweils funktional mit der Steuerungs- und Überwachungsvorrichtung 5 verbunden, die bei vorbestimmten Bedingungen jeden der Ausgänge der Brems-Vorrichtungen B1, B2 anhalten kann, d.h. verhindern kann, dass einer oder beide der Antriebsmotoren M1, M2 eine Ausgangsleistung auf die Antriebseinheit 7 übertragen.

Eine mit der Steuerungs- und Überwachungsvorrichtung 5 funktional in Verbindung stehende Differentialsperre 50 ist in dem Differential integriert und ist derart ausgeführt, dass dieses auf den Ausgang des Differentials eingreifen und diesen blockieren kann, so dass die am Differential angekoppelten Antriebs-Verbindungen 51, 52 nicht angetrieben werden. Die Differentialsperre 50 seht funktional mit der Steuerungs- und Überwachungsvorrichtung 5 in Verbindung, so dass die Steuerungs- und Überwachungsvorrichtung 5 ein Brems-Signal erzeugen und an die Differentialsperre 50 senden kann, auf das der Ausgang des Differentials D arretiert wird.

An jeder Klappe A1, A2 bzw. B1, B2 sind zumindest zwei Verstellvorrichtungen A11, A12, A21, A22; B11, B12, B21, B22 angeordnet, die jeweils Klappen-Kinematiken mit feststehender Drehachse (fixed pivot) aufweisen. An jede der Verstellvorrichtungen A11, A12, A21, A22; B11, B12, B21, B22 ist jeweils eine der beiden Antriebs-Verbindungen 51, 52 angekoppelt, die wiederum an jeweils einer der Antriebsvorrichtungen PA1, PA2, PB1, PB2 angekoppelt sind. Bei dem in der Figur 2 dargestellten Hochauftriebssystem sind an jeder Klappe jeweils zwei Verstellvorrichtungen angeordnet, und zwar im Einzelnen an den inneren Klappen A1 und B1 die Verstellvorrichtungen A11, A12 bzw. B11, B12 und an den äußeren Klappen A2 und B2 die Verstellvorrichtungen A21, A22 bzw. B21, B22.

Jeder der Verstellvorrichtungen A11, A12, B11, B12, A21, A22, B21, B22 ist jeweils ein Übersetzungsgetriebe 20, eine Verstell-Kinematik 21 mit feststehender Drehachse (fixed pivot) sowie ein Positionssensor 22 zugeordnet. Generell kann das Übersetzungsgetriebe 20 durch einen Spindelantrieb oder einen Drehaktuator realisiert sein. Das Übersetzungsgetriebe 20 ist mechanisch an den jeweiligen Drehwellen-Antriebsstrang 51 bzw. 52 angekoppelt und setzt eine Rotationsbewegung des jeweiligen Antriebsstrangs 51 bzw. 52 in eine Verstellbewegung des Klappenbereichs um, der mit der jeweiligen Verstellmechanik gekoppelt ist.

An jeder Antriebsstation einer Klappe ist ein Positionssensor 22 angeordnet, der die aktuelle Position der jeweiligen Klappe ermittelt und diesen Positionswert über eine nicht dargestellte Leitung an die Steuerungs- und Überwachungsvorrichtung 5 sendet.

Bei Betätigung der Brems-Vorrichtungen B1, B2 erzeugen die Antriebsvorrichtungen PA1, PA2, PB1, PB2 keine Ausgangsleistung der Antriebs-Verbindungen, so dass keiner der zu dem jeweiligen aerodynamischen Körper zugeordneten Stellantriebe 20 aktiviert wird. Bei Betätigung der Differentialsperre 50 wird eine Relativbewegung zwischen der Anordnung aus dem ersten Antriebsmotor M1 und der ersten Brems-Vorrichtung B1 und der Anordnung aus dem zweiten Antriebsmotor M2 und der zweiten Brems-Vorrichtung B2 verhindert.

Die Steuerungs- und Überwachungsvorrichtung 5 weist auf:
■ eine Stell-Funktion zur Erstellung von Kommandosignalen für die Antriebsmotoren M1, M2 zur Verstellung der Klappe,
■ eine Übervvachungs-Funktion, mit der ein Kommandosignal an beide Brems-Vorrichtungen B1, B2 sowie an die Differentialsperre D zur Betätigung derselben geschickt wird, wenn die Steuerungs- und Überwachungsvorrichtung 5 aufgrund des Vergleichs von Sensorwerten der Positions-Sensoren an zwei verschiedenen Verstell-Vorrichtungen einer Klappe unterschiedliche Verstell-Zustände ermittelt, die ein vorbestimmtes Maß überschreiten.

Mechanische Fehler z.B. bei den Antriebsverbindungen oder einem Stellantrieb oder einem Verstellmechanismus, wie z.B. ein Klemmen eines Bestandteils des Klappen-Verstellmechanismus oder ein Bruch einer Drehwelle eines Drehwellen-Antriebsstranges können insbesondere zu einer asymmetrischen Betätigung der Klappenelemente führen, was die Steuerungs- und Überwachungsvorrichtung 5 mittels der Überwachungs-Funktion aufgrund der von den Positions-Sensoren 22 übermittelten Signale feststellt. Daraufhin sendet die Steuerungsvorrichtung 5 ein Abschaltsignal an die Brems-Vorrichtungen B1, B2 und aktiviert zusätzlich in beschriebener Weise die Differentialsperre, so dass die Antriebsvorrichtung des jeweiligen aerodynamischen Körpers keine Ausgangsleistung auf die Antriebs-Verbindungen überträgt.

Unterschiedliche Verstell-Zustände an zwei verschiedenen Verstell-Vorrichtungen A11, A12 oder A21, A22 oder B11, B12 oder B21, B22 einer Klappe erkennt die Überwachungs-Funktion der Steuerungs-Vorrichtung 5 aufgrund des Vergleichs der für die jeweilige Klappe kommandierten Stellsignale mit den aus den Sensorwerten der am jeweiligen aerodynamischen Körper angeordneten Positions-Sensoren abgeleiteten Ist-Positionen der Klappe. Wenn die Steuerungs- und Überwachungsvorrichtung 5 unterschiedliche Verstell-Zustände an zwei verschiedenen Verstell-Vorrichtungen einer Klappe identifiziert, wird dies die Steuerungs- und Überwachungsvorrichtung 5 als Defekt in einer der Verstell-Vorrichtungen oder einer der Antriebs-Verbindungen 51, 52 an einer Klappe angesehen, die somit als defekt' behandelt wird. Die Überwachungs-Funktion der Steuerungs- und Überwachungsvorrichtung 5 ist derart gestaltet, dass die betroffene Klappe dann nicht mehr betätigt wird. Bei der Ausführung des erfindungsgemäßen Stellsystems als Hochauftriebssystem ist dieses vorzugsweise derart gestaltet, dass in diesem Fall auch die analog zu der vorgenannten betroffenen Klappe am anderen Tragflügel angeordnete Klappe nicht mehr betätigt wird. Hinsichtlich der Fehlerlokalisierung ergeben sich bei dem erfindungsgemäßen System insbesondere in der Ausgestaltung als Hochauftriebssystem Vorteile, da eine genauere Eingrenzung eine Fehlers auf eine bestimmte Klappe, z.B. bei Klemmfällen oder bestimmten mechanischen Brüchen ("disconnect"), möglich ist.

Bei einem Stellsystem mit jeweils zwei Klappen an jedem Tragflügel, wie dies in der Figur 2 dargestellt ist, ist bei dem beschriebenen Ausfall einer Klappe nicht alle vier Klappen zu arretieren. Durch die erfindungsgemäße Anordnung von jeweils einer Antriebsvorrichtung PA1, PA2, PB1, PB2 mit Verstellvorrichtungen A11, A12, A21, A22; B11, B12, B21, B22 und diese koppelnde Antriebs-Verbindungen 51, 52 an jeder Klappe, kann eine weitere Klappe an demselben Tragflügel aktiv bleiben, so dass das Stellsystem insgesamt noch funktionsfähig bleibt.

Die Steuerungs- und Überwachungsvorrichtung 5 kann zur Kompensation des Ausfalls der Klappe auf verschiedene Weise gestaltet sein: z.B. kann der zu dem ausgefallenen aerodynamischen Körper analoge aerodynamische Körper des jeweils anderen Flügels, d.h. der bezüglich der Längsachse des Flugzeugs symmetrisch zu dem ausgefallen aerodynamischen Körper gelegen ist, ebenfalls ausschalten und die vorgesehenen Steuerungsfunktion durch andere am Flugzeug noch ansteuerbaren aerodynamischen Körper wahrnehmen. Die Steuerungs- und Überwachungsvorrichtung kann auch so gestaltet sein, dass alle weiteren aerodynamischen Körper aktiv bleiben und dass diese gleichmäßig oder nach Priorisierungen verteilt angesteuert werden, um eine vorgesehene Soll-Position des Flugzeugs zu bewirken.

Bei dem erfindungsgemäßen System verbinden jeweils kurze Drehwellenstränge 51, 52 die lokale, einer Klappe bzw. Landeklappe zugewiesenen Antriebsvorrichtungen PA1, PA2, PB1, PB2 mit den zugehörigen lokalen mechanischen Verstell-Kinematiken 21 und Übersetzungsgetrieben 20. Ein weiterer Vorteil des erfindungsgemäßen Systems gegenüber einem System mit Antriebvorrichtungen an jeder Verstellvorrichtung liegt darin, dass die Übersetzungsgetriebe 20 einer Klappe mechanisch über die lokale Antriebsvorrichtung und kurzen Wellensträngen der Antriebs-Verbindungen 51, 52 gekoppelt sind. Dadurch erreicht man eine leichte, einfache Synchronisierung der beiden Übersetzungsgetriebe 20 einer Klappe A1, A2 bzw. B1, B2, so dass ein "Kräftekampf (sogenanntes "force fighting") an den jeweiligen Übersetzungsgetrieben 20 einer Klappe vermieden wird. Weiterhin entfallen bei dem erfindungsgemäßen Stellsystem die bei einem System mit durchgehendem Drehwellenstrang notwendigen Komponenten, z.B. eine Vielzahl von Lagern, Vielverzahnungs-Elementen, Kardangelenken sowie zur Überbrückung großer Richtungsänderungen entsprechende Getriebe. Dies gilt insbesonders für den Drehwellenteil eines Zentralantriebes (Figur 1), der vom Rumpf in den Flügel führt. In diesem Bereich ist die größte Einsparung an Drehwellenteilen bei Anwendung der Erfindung zu erreichen. Damit fallen die Wartungsarbeiten wie das Abschmieren oder die Getriebeölprüfung für diese Komponenten weg oder werden hinsichtlich ihres Aufwands reduziert.

Weiterhin ist mit dem erfindungsgemäßen System in der Ausführung als Landeklappen- oder Hochauftriebs-System, das ein unabhängiges Fahren und Positionieren der jeweiligen inneren bzw. äußeren Klappenpaare A1, B1 bzw. A2, B2 ermöglicht, gegenüber bekannten Systemen eine Flügel-Optimierung speziell an der Hinterkante besonders gut durchzuführen. Dies betrifft insbesondere eine Flügelprofil-Wölbungsanpassung im Reiseflug bei sich reduzierendem Flugzeuggewicht infolge Treibstoffverbrauchs zur Reduktion des aerodynamischen Widerstandes oder eine Flügelprofil-Wölbungsanpassung bei Start- und Landekonfiguration in Abhängigkeit u.a. vom Gewicht zur Reduktion der maximalen Flügelbiegemomente.

Da alle Klappen A1, A2 bzw. B1, B2 mechanisch entkoppelt sind, ist es mit dieser Anordnung weiterhin möglich, den extrem asymmetrischen Flugzustand bei Ausfall eines Triebwerkes durch entsprechende asymmetrische, d.h. unterschiedliche Klappenpositionen zwischen linken und rechten Klappen A1, A2 bzw. B1, B2 eines Tragflügels mit zu kompensieren. Während dies bei bekannten Hochauftriebssystemen nur für die primären Flugsteuerungselementen, wie Seitenruder, Querruder, zum Teil auch Bremsklappen, möglich war, kommen bei dem erfindungsgemäßen Stellsystem auch die Landeklappen mit ihrer großen potentiellen Rollautorität hinzu.

Darüber hinaus ermöglicht das erfindungsgemäße System ein differentielles Klappenfahren, d.h. ein zu den innere Landeklappenpaaren A1, B1 unterschiedliches, unabhängiges Fahren und Positionieren der äußeren Landeklappenpaare A2, B2, was mit einer zentralen Antriebseinheit und einem einfachen Drehwellenstrang (Figur 1) nicht möglich ist.

## Patentansprüche

1. Fehlertolerantes Stellsystem mit zumindest einer an jeweils einem der Tragflügel eines Flugzeugs verstellbaren Klappe (A1, A2; B1, B2) und mit einer Steuerungs- und Überwachungsvorrichtung (5), aufweisend:
■ mit der Steuerungs- und Überwachungsvorrichtung (5) funktional in Verbindung stehende Antriebsvorrichtungen (PA1, PA2, PB1, PB2), von denen jeweils eine jeder Klappe (A1, A2; B1, B2) zugeordnet ist, wobei jeder Klappe (A1, A2; B1, B2) jeweils eine Antriebsvorrichtung (PA1, PA2, PB1, PB2) zugeordnet ist, jeweils aufweisend: zwei Antriebsmotoren (M1, M2), zwei Brems-Vorrichtungen (B1, B2), wobei jedem Antriebsmotor (M1, M2) jeweils eine Brems-Vorrichtung (B1, B2) zum Anhalten des Ausgangs des jeweiligen Antriebsmotors (M1, M2) zugeordnet ist, ein die Ausgänge derselben auf diese summierende Weise koppelndes Differential, eine Ausgangswelle zur Kopplung des Ausgangs des Differentials mit Antriebs-Verbindungen (51, 52) und eine mit der Steuerungs- und Überwachungsvorrichtung (5) funktional in Verbindung stehende Differentialsperre (D) aufweist, wobei jede der Brems-Vorrichtungen (B1, B2) sowie die Differentialsperre (50) durch ein Kommandosignal der Steuerungs- und Überwachungsvorrichtung (5) betätigt werden kann;
■ Verstellvorrichtungen (A11, A12, A21, A22; B11, B12, B21, B22), von denen zumindest zwei an jeder Klappe (A1, A2; B1, B2) und voneinander in Spannweiten-Richtung der Klappe (A1, A2; B1, B2) beabstandet angeordnet sind und die über jeweils eine Antriebs-Verbindung (51, 52) an die der Klappe (A1, A2; B1, B2) jeweils zugeordnete Antriebsvorrichtung (PA1, PA2, PB1, PB2) angekoppelt sind, wobei jede Verstellvorrichtung jeweils aufweist: ein Übersetzungsgetriebe (20), eine Verstellmechanik (21) sowie einen mit der Steuerungs- und Überwachungsvorrichtung (5) funktional verbundenen Positionssensor (22) zur Erfassung des Verstellzustands der Klappe;
wobei die Steuerungs- und Überwachungsvorrichtung (5) aufweist:
■ eine Stell-Funktion zur Erstellung von Kommandosignalen für die Antriebsmotoren (M1, M2) zur Verstellung der Klappe,
■ eine Überwachungs-Funktion, mit der ein Kommandosignal an beide Brems-Vorrichtungen (B1, B2) sowie an die Differentialsperre (50) zur Betätigung derselben geschickt wird, wenn die Steuerungs- und Überwachungsvorrichtung (5) aufgrund des Vergleichs von Sensorwerten der Positions-Sensoren an zwei verschiedenen Verstell-Vorrichtungen einer Klappe unterschiedliche Verstell-Zustände ermittelt.

2. Fehlertolerantes Stellsystem nach dem Anspruch 1, **dadurch gekennzeichnet, dass** das Übersetzungsgetriebe (20) aus einem Drehaktuator gebildet ist.

3. Fehlertolerantes Stellsystem nach dem Anspruch 1, **dadurch gekennzeichnet, dass** das Übersetzungsgetriebe (20) aus einem Linearantrieb gebildet ist.

4. Fehlertolerantes Stellsystem nach einem der voranstehenden Ansprüche, **dadurch gekennzeichnet, dass** die zwei Antriebsmotoren elektrische Antriebsmotoren sind.

5. Fehlertolerantes Stellsystem nach einem der voranstehenden Ansprüche 1 bis 3, **dadurch gekennzeichnet, dass** von den zwei Antriebsmotoren einer ein elektrischer Antriebsmotor und der andere ein hydraulischer Antriebsmotor ist.

6. Fehlertolerantes Stellsystem nach einem der voranstehenden Ansprüche 1 bis 3, **dadurch gekennzeichnet, dass** die zwei Antriebsmotoren hydraulische Antriebsmotoren sind.

7. Fehlertolerantes Stellsystem nach einem der voranstehenden Ansprüche, **dadurch gekennzeichnet, dass** das Stellsystem ein Hochauftriebssystem ist.

8. Verfahren zur Überwachung eines Stellsystems mit zumindest einer an jeweils einem der Tragflügel eines Flugzeugs verstellbaren Klappe (A1, A2; B1, B2) und mit einer Steuerungs- und Überwachungsvorrichtung (5), aufweisend:
■ mit der Steuerungs- und Überwachungsvorrichtung (5) funktional in Verbindung stehende Antriebsvorrichtungen (PA1, PA2, PB1, PB2), von denen jeweils eine jeder Klappe (A1, A2; B1, B2) zugeordnet ist, wobei jeder Klappe (A1, A2; B1, B2) jeweils eine Antriebsvorrichtung (PA1, PA2, PB1, PB2) zugeordnet ist, jeweils aufweisend: zwei Antriebsmotoren (M1, M2), zwei Brems-Vorrichtungen (B1, B2), wobei jedem Antriebsmotor (M1, M2) jeweils eine Brems-Vorrichtung (B1, B2) zum Anhalten des Ausgangs des jeweiligen Antriebsmotors (M1, M2) zugeordnet ist, ein die Ausgänge derselben auf diese summierende Weise koppelndes Differential, eine Ausgangswelle zur Kopplung des Ausgangs des Differentials mit Antriebs-Verbindungen (51, 52) und eine mit der Steuerungs- und Überwachungsvorrichtung (5) funktional in Verbindung stehende Differentialsperre (D) aufweist, wobei jede der Brems-Vorrichtungen (B1, B2) sowie die Differentialsperre (50) durch ein Kommandosignal der Steuerungs- und Überwachungsvorrichtung (5) betätigt werden kann;
■ Verstellvorrichtungen (A11, A12, A21, A22; B 11, B12, B21, B22), von denen zumindest zwei an jeder Klappe (A1, A2; B1, B2) und voneinander in Spannweiten-Richtung der Klappe (A1, A2; B1, B2) beabstandet angeordnet sind und die über jeweils eine Antriebs-Verbindung (51, 52) an die der Klappe (A1, A2; B1, B2) jeweils zugeordnete Antriebsvorrichtung (PA1, PA2, PB1, PB2) angekoppelt sind, wobei jede Verstellvorrichtung jeweils aufweist: ein Übersetzungsgetriebe (20), eine Verstellmechanik (21) sowie einen mit der Steuerungs- und Überwachungsvorrichtung (5) funktional verbundenen Positionssensor (22) zur Erfassung des Verstellzustands der Klappe;
wobei das Verfahren die folgenden Schritte aufweist:
• Erstellung von Kommandosignalen für die Antriebsmotoren (M1, M2) zur Verstellung der Klappe,
• Übermitteln eines Kommandosignals an beide Brems-Vorrichtungen (B1, B2) sowie an die Differentialsperre (50) zur Betätigung derselben, wenn die Steuerungs- und Überwachungsvorrichtung (5) aufgrund des Vergleichs von Sensorwerten der Positions-Sensoren an zwei verschiedenen Verstell-Vorrichtungen einer Klappe unterschiedliche Verstell-Zustände ermittelt.

9. Verfahren nach dem Anspruch 8, **dadurch gekennzeichnet, dass** das Übersetzungsgetriebe (20) aus einem Drehaktuator gebildet ist.

10. Verfahren nach dem Anspruch 8, **dadurch gekennzeichnet, dass** das Übersetzungsgetriebe (20) aus einem Linearantrieb gebildet ist.

11. Verfahren nach einem der Ansprüche 8 bis 10, **dadurch gekennzeichnet, dass** die zwei Antriebsmotoren elektrische Antriebsmotoren sind.

12. Verfahren nach einem der Ansprüche 8 bis 10, **dadurch gekennzeichnet, dass** von den zwei Antriebsmotoren einer ein elektrischer Antriebsmotor und der andere ein hydraulischer Antriebsmotor ist.

13. Verfahren nach einem der Ansprüche 8 bis 10, **dadurch gekennzeichnet, dass** die zwei Antriebsmotoren hydraulische Antriebsmotoren sind.

14. Verfahren nach einem der Ansprüche 8 bis 13, **dadurch gekennzeichnet, dass** das Stellsystem ein Hochauftriebssystem ist.

## Claims

1. A fault-tolerant actuating system with at least one flap (A1, A2; B1, B2), adjustable on a respective wing of an aircraft, and with a control and monitoring device (5), comprising:
■ drive devices (PA1, PA2, PB1, PB2) that are functionally connected to the control and monitoring device (5), with one of these drive devices (PA1, PA2, PB1, PB2) in each case being associated with a flap (A1, A2; B1, B2), wherein each flap (A1, A2; B1, B2) in each case is associated with a drive device (PA1, PA2, PB1, PB2), in each case comprising: two drive motors (M1, M2), two brake mechanisms (B1, B2), wherein each drive motor (M1, M2) is associated with a brake mechanism for stopping rotation of the output of the respective drive motor (M1, M2), a differential that couples the outputs of the aforesaid to the aforesaid in a summing manner, an output shaft for coupling the output of the differential to drive connections (51, 52), and a differential lock (D) that is functionally connected to the control and monitoring device (5), wherein each of the brake mechanisms (B1, B2) as well as the differential lock (50) can be operated by means of a command signal from the control and monitoring device (5);
■ adjustment devices (A11, A12, A21, A22; B11, B12, B21, B22), at least two of which are arranged at each flap (A1, A2; B1, B2) so as to be spaced apart from each other in the wingspan direction of the flap (A1, A2; B1, B2), with the adjustment devices (A11, A12, A21, A22; B11, B12, B21, B22) being coupled, in each case by way of a drive connection (51, 52), to the drive device (PA1, PA2, PB1, PB2) associated with the flap (A1, A2; B1, B2), wherein each adjustment device in each case comprises: a transmission gear unit (20), an adjustment mechanism (21) and a position sensor (22) that is functionally connected to the control and monitoring device (5) for acquiring the adjustment state of the flap;
wherein the control and monitoring device (5) comprises:
■ an actuating function for generating command signals for the drive motors (M1, M2) for adjusting the flap,
■ a monitoring function by means of which a command signal is transmitted to both brake mechanisms (B1, B2) and to the differential lock (50) for operating the aforesaid when the control and monitoring device (5) based on a comparison of sensor values of the position sensors of two different adjustment devices of a flap determines different adjustment states.

2. The fault-tolerant actuating system according to claim 1, **characterised in that** the transmission gear unit (20) comprises a rotary actuator.

3. The fault-tolerant actuating system according to claim 1, **characterised in that** the transmission gear unit (20) comprises a linear drive.

4. The fault-tolerant actuating system according to one of the preceding claims, **characterised in that** the two drive motors are electrical drive motors.

5. The fault-tolerant actuating system according to one of the preceding claims 1 to 3, **characterised in that** one of the two drive motors is an electrical drive motor, and the other drive motor is a hydraulic drive motor.

6. The fault-tolerant actuating system according to one of the preceding claims 1 to 3, **characterised in that** the two drive motors are hydraulic drive motors.

7. The fault-tolerant actuating system according to one of the preceding claims, **characterised in that** actuating system is a high-lift system.

8. A method for monitoring an actuating system with at least one flap (A1, A2; B1, B2), adjustable on a respective wing of an aircraft, and with a control and monitoring device (5), the fault-tolerant actuating system comprising:
■ drive devices (PA1, PA2, PB1, PB2) that are functionally connected to the control and monitoring device (5), with one of these drive devices (PA1, PA2, PB1, PB2) in each case being associated with a flap (A1, A2; B1, B2), wherein each flap (A1, A2; B1, B2) in each case is associated with a drive device (PA1, PA2, PB1, PB2), in each case comprising: two drive motors (M1, M2), two brake mechanisms (B1, B2), wherein each drive motor (M1, M2) is associated with a brake mechanism for stopping rotation of the output of the respective drive motor (M1, M2), a differential that couples the outputs of the aforesaid to the aforesaid in a summing manner, an output shaft for coupling the output of the differential to drive connections (51, 52), and a differential lock (D) that is functionally connected to the control and monitoring device (5), wherein each of the brake mechanisms (B1, B2) as well as the differential lock (50) can be operated by means of a command signal from the control and monitoring device (5);
■ adjustment devices (A11, A12, A21, A22; B11, B12, B21, B22), at least two of which are arranged at each flap (A1, A2; B1, B2) so as to be spaced apart from each other in the wingspan direction of the flap (A1, A2; B1, B2), with the adjustment devices (A11, A12, A21, A22; B11, B12, B21, B22) being coupled, in each case by way of a drive connection (51, 52), to the drive device (PA1, PA2, PB1, PB2) associated with the flap (A1, A2; B1, B2), wherein each adjustment device in each case comprises: a transmission gear unit (20), an adjustment mechanism (21) and a position sensor (22) that is functionally connected to the control and monitoring device (5) for acquiring the adjustment state of the flap;
the method comprising the following steps:
■ generating command signals for the drive motors (M1, M2) for adjusting the flap,
■ transmitting a command signal to both brake mechanisms (B1, B2) and to the differential lock (50) for operating the aforesaid when the control and monitoring device (5) based on a comparison of sensor values of the position sensors of two different adjustment devices of a flap determines different adjustment states.

9. The method according to claim 8, **characterised in that** the transmission gear unit (20) comprises a rotary actuator.

10. The method according to claim 8, **characterised in that** the transmission gear unit (20) comprises a linear drive.

11. The method according to one of the claims 8 to 10, **characterised in that** the two drive motors are electrical drive motors.

12. The method according to one of the claims 8 to 10, **characterised in that** one of the two drive motors is an electrical drive motor and the other one is a hydraulic drive motor.

13. The method according to one of the claims 8 to 10, **characterised in that** the two drive motors are hydraulic drive motors.

14. The method according to one of the claims 8 to 10, **characterised in that** the actuating system is a high-lift system.

## Revendications

1. Système de réglage tolérant aux pannes comprenant au moins un volet (A1, A2 ; B1, B2) ajustable sur respectivement l'une des ailes portantes d'un avion et un dispositif de commande et de contrôle (5), présentant :
- des dispositifs d'entraînement (PA1, PA2, PB1, PB2) en liaison fonctionnelle avec le dispositif de commande et de contrôle (5) desquels respectivement chaque volet (A1, A2 ; B1, B2) est attribué, sachant que chaque volet (A1, A2 ; B1, B2) a un dispositif d'entraînement (PA1, PA2, PB1, PB2) respectif, présentant respectivement : deux moteurs d'entraînement (M1, M2), deux dispositifs de freinage (B1, B2), dans lequel chaque moteur d'entraînement (M1, M2) a un dispositif de freinage (B1, B2) pour arrêter la sortie du moteur d'entraînement (M1, M2) respectif, un différentiel couplant les sorties de ceux-ci en les totalisant, un arbre de sortie pour coupler la sortie du différentiel à des liaisons d'entraînement (51, 52) et un blocage de différentiel (D) en liaison fonctionnelle avec le dispositif de commande et de contrôle (5), sachant que chacun des dispositifs de freinage (B1, B2) ainsi que le blocage de différentiel (50) peut être actionné par un signal de commande du dispositif de commande et de contrôle (5) ;
- des dispositifs d'ajustage (A11, A12, A21, A22 ; B11, B12, B21, B22) desquels au moins deux sont disposés sur chaque volet (A1, A2 ; B1, B2) et écartés l' un de l'autre dans le sens d'envergure du volet (A1, A2 ; B1, B2) et sont couplés via respectivement une liaison d'entraînement (51, 52) au dispositif d'entraînement (PA1, PA2, PB1, PB2) attribué respectivement au volet (A1, A2 ; B1, B2), sachant que chaque dispositif d'ajustage présente respectivement : un engrenage multiplicateur (20), un mécanisme d'ajustage (21) ainsi qu'un capteur de position (22) relié de manière fonctionnelle au dispositif de commande et de contrôle (5) pour détecter l'état d'ajustage du volet ;
sachant que le dispositif de commande et de contrôle (5) présente :
- une fonction de commande pour établir des signaux de commande pour les moteurs d'entraînement (M1, M2) pour régler le volet,
- une fonction de contrôle avec laquelle un signal de commande est envoyé aux deux dispositifs de freinage (B1, B2) ainsi qu'au blocage de différentiel (50) pour actionner ceux-ci, lorsque le dispositif de commande et de contrôle (5), en raison de la comparaison des valeurs des capteurs de position, calcule des états d'ajustage différents sur deux dispositifs d'ajustage différents d'un volet.

2. Système de réglage tolérant aux pannes selon la revendication 1, **caractérisé en ce que** l'engrenage multiplicateur (20) est formé d'un actionneur rotatif.

3. Système de réglage tolérant aux pannes selon la revendication 1, **caractérisé en ce que** l'engrenage multiplicateur (20) est formé d'un entraînement linéaire.

4. Système de réglage tolérant aux pannes selon l'une des revendications précédentes, **caractérisé en ce que** les deux moteurs d'entraînement sont des moteurs d'entraînement électriques.

5. Système de réglage tolérant aux pannes selon l'une des revendications 1 à 3, **caractérisé en ce que** des deux moteurs d'entraînement, l'un est un moteur d'entraînement électrique et l'autre un moteur d'entraînement hydraulique.

6. Système de réglage tolérant aux pannes selon l'une des revendications 1 à 3, **caractérisé en ce que** les deux moteurs d'entraînement sont des moteurs d'entraînement hydrauliques.

7. Système de réglage tolérant aux pannes selon l'une des revendications précédentes, **caractérisé en ce que** le système de réglage est un système hypersustentateur.

8. Procédé de contrôle d'un système de réglage comprenant au moins un volet (A1, A2 ; B1, B2) ajustable sur respectivement l'une des ailes portantes d'un avion et un dispositif de commande et de contrôle (5), présentant :
- des dispositifs d'entraînement (PA1, PA2, PB1, PB2) en liaison fonctionnelle avec le dispositif de commande et de contrôle (5) desquels respectivement chaque volet (A1, A2 ; B1, B2) est attribué, sachant que chaque volet (A1, A2 ; B1, B2) a un dispositif d'entraînement (PA1, PA2, PB1, PB2) respectif, présentant respectivement : deux moteurs d'entraînement (M1, M2), deux dispositifs de freinage (B1, B2), dans lequel chaque moteur d'entraînement (M1, M2) a un dispositif de freinage (B1, B2) pour arrêter la sortie du moteur d'entraînement (M1, M2) respectif, un différentiel couplant les sorties de ceux-ci en les totalisant, un arbre de sortie pour coupler la sortie du différentiel à des liaisons d'entraînement (51, 52) et un blocage de différentiel (D) en liaison fonctionnelle avec le dispositif de commande et de contrôle (5), sachant que chacun des dispositifs de freinage (B1, B2) ainsi que le blocage de différentiel (50) peut être actionné par un signal de commande du dispositif de commande et de contrôle (5) ;
- des dispositifs d'ajustage (A11, A12, A21, A22 ; B11, B12, B21, B22) desquels au moins deux sont disposés sur chaque volet (A1, A2 ; B1, B2) et écartés l'un de l'autre dans le sens d'envergure du volet (A1, A2 ; B1, B2) et sont couplés via respectivement une liaison d'entraînement (51, 52) au dispositif d'entraînement (PA1, PA2, PB1, PB2) attribué respectivement au volet (A1, A2 ; B1, B2), sachant que chaque dispositif d'ajustage présente respectivement : un engrenage multiplicateur (20), un mécanisme d'ajustage (21) ainsi qu'un capteur de position (22) relié de manière fonctionnelle au dispositif de commande et de contrôle (5) pour détecter l'état d'ajustage du volet ;
sachant que le procédé comprend les étapes suivantes :
- la création de signaux de commande pour les moteurs d'entraînement (M1, M2) pour régler le volet,
- la transmission d'un signal de commande aux deux dispositifs de freinage (B1, B2) ainsi qu'au blocage de différentiel (50) pour actionner ceux-ci, lorsque le dispositif de commande et de contrôle (5), en raison de la comparaison des valeurs des capteurs de position, calcule des états d'ajustage différents sur deux dispositifs d'ajustage différents d'un volet.

9. Procédé selon la revendication 8, **caractérisé en ce que** l'engrenage multiplicateur (20) est formé d'un actionneur rotatif.

10. Procédé selon la revendication 8, **caractérisé en ce que** l'engrenage multiplicateur (20) est formé d'un entraînement linéaire.

11. Procédé selon l'une des revendications 8 à 10, **caractérisé en ce que** les deux moteurs d'entraînement sont des moteurs d'entraînement électriques.

12. Procédé selon l'une des revendications 8 à 10, **caractérisé en ce que** des deux moteurs d'entraînement, l'un est un moteur d'entraînement électrique et l'autre un moteur d'entraînement hydraulique.

13. Procédé de réglage selon l'une des revendications 8 à 10, **caractérisé en ce que** les deux moteurs d'entraînement sont des moteurs d'entraînement hydrauliques.

14. Procédé de réglage selon l'une des revendications 8 à 13, **caractérisé en ce que** le système de réglage est un système hypersustentateur.
